# EUROPEAN PATENT APPLICATION

(11) **EP 3 336 030 A1**
(43) Date of publication of application: **20.06.2018**
(21) Application number: 17208268.7
(22) Date of filing: 18.12.2017
(51) Int. Cl.: B66B 1/34

(54) **OPTICAL STANDOFF SENSOR**

(30) Priority: 16.12.2016 US 201615381874
(71) Applicant: Otis Elevator Company, Farmington, Connecticut 06032 (US)
(72) Inventor: HARRIS, Peter R, East Hartford, CT Connecticut 06108 (US); BIRNKRANT, Michael J, East Hartford, CT Connecticut 06108 (US); RYDE, Julian C, Berkeley, CA California 94705 (US); LINCOLN, David L, East Hartford, CT Connecticut 06108 (US)
(74) Representative: Ramsay, Laura Anne

(57) **Abstract**

A method of monitoring an elevator car is provided. The method comprising: moving the elevator car (27) through a route segment in a first direction; moving a sensing system (100) integrally connected to the elevator car (27) over a segment of a scattering surface, the sensing system (100) comprising a first light source and a first light sensing device; emitting a plurality of first light impulses onto the scattering surface using the first light source at a first impulse rate; measuring a first data set comprising light scattered off the scattering surface for each of the first light impulses using the first light sensing device; and determining a first velocity of the elevator car in response to the first data set and a baseline data set.

## Description

### BACKGROUND

The subject matter disclosed herein relates generally to the field velocity monitoring, and specifically to a method and apparatus for monitoring the velocity (and position) of an elevator car.

Commonly, the velocity of an elevator car is determined indirectly by monitoring the cable drive system and/or directly by installing additional encoding tape that can be read via a sensor on the elevator car. An efficient method of directly monitoring the velocity of the elevator car without the need to install encoding tape is desired.

### BRIEF SUMMARY

According to one embodiment, a method of monitoring an elevator car is provided. The method comprising: moving the elevator car through a route segment in a first direction; moving a sensing system integrally connected to the elevator car over a segment of a scattering surface, the sensing system comprising a first light source and a first light sensing device; emitting a plurality of first light impulses onto the scattering surface using the first light source at a first impulse rate; measuring a first data set comprising light scattered off the scattering surface for each of the first light impulses using the first light sensing device; and determining a first velocity of the elevator car in response to the first data set and a baseline data set.

In addition to one or more of the features described above, or as an alternative, further embodiments of the method may include determining the baseline data through a baseline run conducted while moving the elevator through the route segment, the baseline run comprising: emitting a plurality of second light impulses onto the scattering surface using a second light source at a second selected impulse rate; measuring scattered light from the second light source reflected off the scattering surface for each of the second light impulses using a second light sensing device, the second light detecting device being located at a first distance away from the first light detecting device towards the first direction; and logging the measured scattered light from the second light source for each of the second light impulses as a baseline data set.

In addition to one or more of the features described above, or as an alternative, further embodiments of the method may include determining a first correlation in response to the first data set and the baseline data set, the first correlation includes a first offset time period between the first data set and baseline data set; wherein the first velocity of the elevator car is determined based upon the first offset time period and the first distance.

In addition to one or more of the features described above, or as an alternative, further embodiments of the method may include determining the baseline data through a baseline run conducted while moving the elevator through the route segment, the baseline run comprising: measuring scattered light from the first light source reflected off the scattering surface for each of the first light impulses using a second light sensing device, wherein the second light sensing device is located perpendicular to the first light source towards the first direction and the first light sensing device is located perpendicular to the first light source towards a second direction opposite the first direction; and logging the measured scattered light from the second light source for each of the first light impulses as a baseline data set.

In addition to one or more of the features described above, or as an alternative, further embodiments of the method may include determining a first correlation in response to the first data set and the baseline data set, the first correlation includes a first offset time period between the first data set and baseline data set; wherein the first velocity of the elevator car is determined based upon the first offset time period and the first distance.

In addition to one or more of the features described above, or as an alternative, further embodiments of the method may include determining the baseline data through a positional learn run conducted prior to moving the elevator through the route segment, the positional learn run comprising: moving the sensing system over the scattering surface at a selected velocity; emitting a plurality of third light impulses onto the scattering surface using a first light source at a third selected impulse rate; measuring scattered light from the first light source reflected off the scattering surface for each of the third light impulses using the first light sensing device; logging the measured scattered light from the first light source for each of the third light impulses as the baseline data set; and determining a relative position on the scattering surface for each of the third light impulses in the baseline data set in response to the selected velocity.

In addition to one or more of the features described above, or as an alternative, further embodiments of the method may include determining a first actual position of the elevator car during the route segment in response to the first data set, the baseline data set, and each relative position of the baseline data set; and determining a second actual position of the elevator car during the route segment in response to the first data set, the baseline data set, and each relative position of the baseline data set; wherein the first velocity is determined in response to the first actual position, the second actual position, and an elapsed time between the first actual position and the second actual position.

In addition to one or more of the features described above, or as an alternative, further embodiments of the method may include: emitting a plurality of fourth light impulses onto the scattering surface using a third light source at a fourth selected impulse rate, the third light source being located at a second distance away from the second light source towards a second direction opposite the first direction; measuring scattered light from the third light source reflected off the scattering surface for each of the fourth light impulses using a third light sensing device; logging the measured scattered light from the third light source for each of the fourth light impulses as a second data set; determining a second correlation in response to the baseline data set and the second data set, the second correlation includes a second offset time period between the baseline data set and the second data set; determining a second velocity based upon the second offset time period and the second distance; and determining a final velocity based upon the first velocity and the second velocity.

In addition to one or more of the features described above, or as an alternative, further embodiments of the method may include that the scattering surface is an elevator car guide rail.

According to another embodiment, a sensing system for monitoring an elevator car is provided. The sensor system comprising: a first light source configured to emit a plurality of first light impulses onto a scattering surface at a first impulse rate as the elevator car moves through a route segment in a first direction; a first light sensing device configured to measure a first data set comprising light scattered off the scattering surface for each of the first light impulses; and a controller configured to determine a first velocity of the elevator car in response to the first data set and a baseline data set.

In addition to one or more of the features described above, or as an alternative, further embodiments of the sensing system may include: a second light source configured to emit a plurality of second light impulses onto the scattering surface at a second impulse rate as the elevator car moves through a route segment in a first direction; and a second light sensing device configured to measure light scattered off the scattering surface for each of the second light impulses and log the measurements as the baseline dataset, the second light sensing device being located at a first distance away from the first light sensing device towards the first direction.

In addition to one or more of the features described above, or as an alternative, further embodiments of the sensing system may include that the controller is configured to determine a first correlation in response to the first data set and the baseline data set, the first correlation includes a first offset time period between the first data set and baseline data set; wherein the first velocity of the elevator car is determined based upon the first offset time period and the first distance.

In addition to one or more of the features described above, or as an alternative, further embodiments of the sensing system may include a second light sensing device configured to measure light scattered off the scattering surface for each of the first light impulses and log the measurements as the baseline dataset, the second light sensing device being located perpendicular to the first light source towards the first direction and the first light sensing device is located perpendicular to the first light source towards a second direction opposite the first direction; wherein the second light sensing device is located at a first distance away from the first light sensing device.

In addition to one or more of the features described above, or as an alternative, further embodiments of the sensing system may include that the controller is configured to determine a first correlation in response to the first data set and the baseline data set, the first correlation includes a first offset time period between the first data set and baseline data set; wherein the first velocity of the elevator car is determined based upon the first offset time period and the first distance.

In addition to one or more of the features described above, or as an alternative, further embodiments of the sensing system may include that the baseline data is determined through a positional learn run conducted prior to moving the elevator through the route segment, the positional learn run having operations comprising: moving the sensing system over the scattering surface at a selected velocity; emitting a plurality of third light impulses onto the scattering surface using a first light source at a third selected impulse rate; measuring scattered light from the first light source reflected off the scattering surface for each of the third light impulses using the first light sensing device; logging the measured scattered light from the first light source for each of the third light impulses as the baseline data set; and determining a relative position on the scattering surface for each of the third light impulses in the baseline data set in response to the selected velocity.

In addition to one or more of the features described above, or as an alternative, further embodiments of the sensing system may include that the controller is configured to determine: a first actual position of the elevator car during the route segment in response to the first data set, the baseline data set, and each relative position of the baseline data set; and a second actual position of the elevator car during the route segment in response to the first data set, the baseline data set, and each relative position of the baseline data set; wherein the first velocity is determined in response to the first actual position, the second actual position, and an elapsed time between the first actual position and the second actual position.

In addition to one or more of the features described above, or as an alternative, further embodiments of the sensing system may include that the scattering surface is an elevator car guide rail.

In addition to one or more of the features described above, or as an alternative, further embodiments of the sensing system may include that the first light source and the first light sensing device are located on the elevator car.

In addition to one or more of the features described above, or as an alternative, further embodiments of the sensing system may include that the first light source, the first light sensing device, the second light source, and the second light sensing device are each oriented in a perpendicular orientation with the scattering surface.

In addition to one or more of the features described above, or as an alternative, further embodiments of the sensing system may include that a first angle of coincidence between the first light source and the first light sensing device is greater than 0 degrees and less than or equal to about 180 degrees; and a second angle of coincidence between the second light source and the second light sensing device is about equal to the first angle of coincidence.

Technical effects of embodiments of the present disclosure include the ability to determine the velocity of an elevator car through measuring, logging and comparing the light scatter off of a scattering surface as the elevator car moves through an elevator shaft.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The foregoing and other features, and advantages of the disclosure are apparent from the following detailed description taken in conjunction with the accompanying drawings in which like elements are numbered alike in the several FIGURES:
FIG. 1 illustrates a schematic view of an elevator system, in accordance with an embodiment of the disclosure;
FIG. 2 illustrates a schematic view of a configuration of a sensing system that may be incorporated on the elevator systems of FIG. 1, in accordance with an embodiment of the disclosure;
FIG. 2A illustrates a schematic view of an alternate configuration of a sensing system that may be incorporated on the elevator systems of FIG. 1, in accordance with an embodiment of the disclosure;
FIG. 2B illustrates a schematic view of an alternate configuration of a sensing system that may be incorporated on the elevator systems of FIG. 1, in accordance with an embodiment of the disclosure;
FIG. 3 illustrates a schematic view of the data output from the sensing system of FIG. 2, in accordance with an embodiment of the disclosure;
FIG. 4 illustrates a schematic view of the relative orientation of a light source, a light sensing device, and a scattering surface within the sensing system, in accordance with an embodiment of the disclosure;
FIG. 5 illustrates a schematic view of the relative orientation of a light source, a light sensing device, and a scattering surface within the sensing system, in accordance with an embodiment of the disclosure;
FIG. 6 is a flow chart of a method of monitoring an elevator car, in accordance with an embodiment of the disclosure;
FIG. 7 is a flow chart of additional steps in the method of FIG. 6 for monitoring an elevator car, in accordance with an embodiment of the disclosure;
FIG. 7A is a flow chart of additional steps in the method of FIG. 7 for monitoring an elevator car, in accordance with an embodiment of the disclosure;
FIG. 8 is a flow chart of additional steps in the method of FIG. 6 for monitoring an elevator car, in accordance with an embodiment of the disclosure; and
FIG. 9 is a flow chart of additional steps in the method of FIG. 8 for monitoring an elevator car, in accordance with an embodiment of the disclosure.

### DETAILED DESCRIPTION

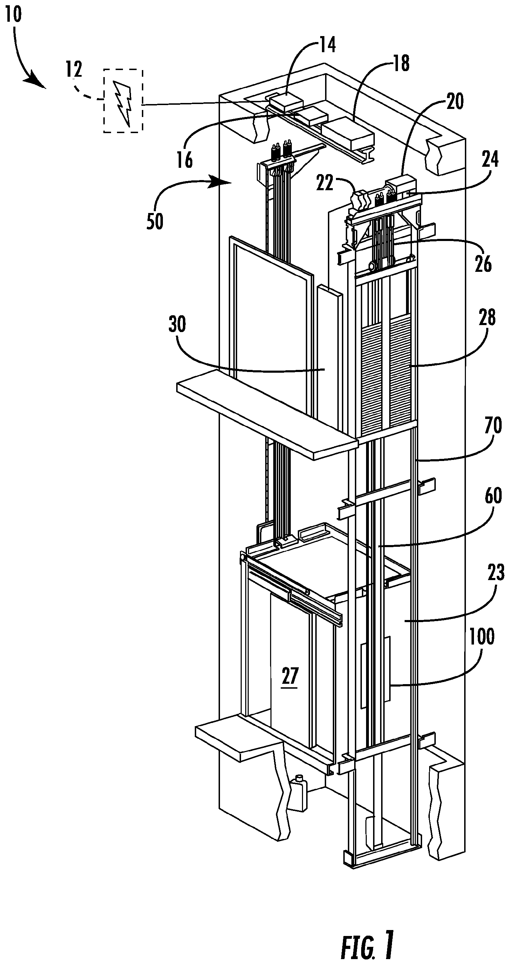

FIG. 1 shows a schematic view of an elevator system 10, in accordance with an embodiment of the disclosure. With reference to FIG. 1, the elevator system 10 includes an elevator car 23 configured to move vertically upward and downward within a hoistway 50 along a plurality of car guide rails 60. The elevator system 10 also includes a counterweight 28 operably connected to the elevator car 23 via a pulley system 26. The counterweight 28 is configured to move vertically upward and downward within the hoistway 50. The counterweight 28 moves in a direction generally opposite the movement of the elevator car 23, as is known in conventional elevator systems. Movement of the counterweight 28 is guided by counterweight guide rails 70 mounted within the hoistway 50. The elevator car 23 also has doors 27 that open and close, allowing passengers to enter and exit the elevator car 23.

The elevator system 10 also includes a power source 12. The power is provided from the power source 12 to a switch panel 14, which may include circuit breakers, meters, etc. From the switch panel 14, the power may be provided directly to the drive unit 20 through a controller 30 or to an internal power source charger 16, which converts AC power to direct current (DC) power to charge an internal power source 18 that requires charging. For instance, an internal power source 18 that requires charging may be a battery, capacitor, or any other type of power storage device known to one of ordinary skill in the art. Alternatively, the internal power source 18 may not require charging from the AC external power source 12 and may be a device such as, for example a gas powered generator, solar cells, hydroelectric generator, wind turbine generator or similar power generation device. The internal power source 18 may power various components of the elevator system 10 when an external power source is unavailable. The drive unit 20 drives a machine 22 to impart motion to the elevator car 23 via a traction sheave of the machine 22. The machine 22 also includes a brake 24 that can be activated to stop the machine 22 and elevator car 23. As will be appreciated by those of skill in the art, FIG. 1 depicts a machine room-less elevator system 10, however the embodiments disclosed herein may be incorporated with other elevator systems that are not machine room-less or that include any other known elevator configuration. In addition, elevator systems having more than one independently operating elevator car in each elevator shaft and/or ropeless elevator systems may also be used. In one embodiment, the elevator car may have two or more compartments. The elevator system 10 also includes a sensing system 100 located on the elevator car 23. The sensing system 100 will be discussed further below.

The controller 30 is responsible for controlling the operation of the elevator system 10. The controller 30 may also determine a mode (motoring, regenerative, near balance) of the elevator car 23. The controller 30 may use the car direction and the weight distribution between the elevator car 23 and the counterweight 28 to determine the mode of the elevator car. The controller 30 may adjust the velocity of the elevator car 23 to reach a target floor. The controller 30 may include a processor and an associated memory. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

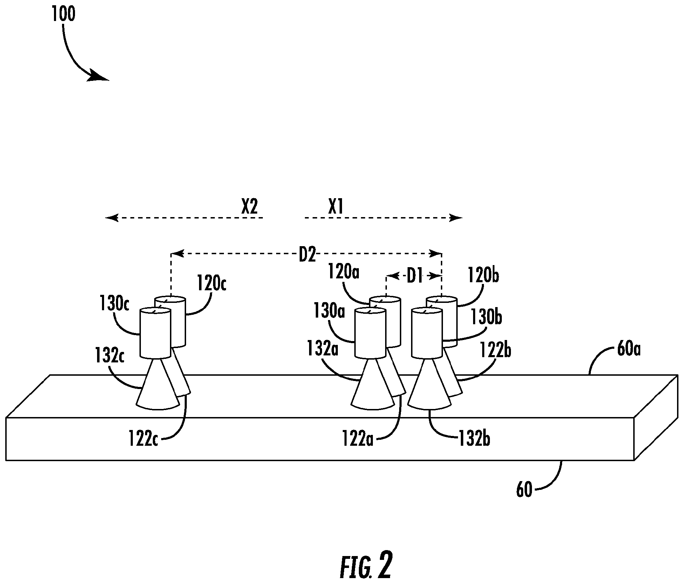

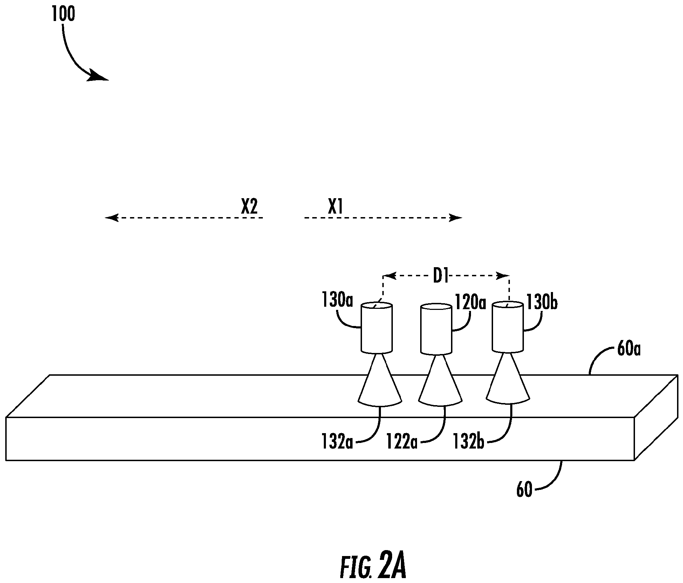

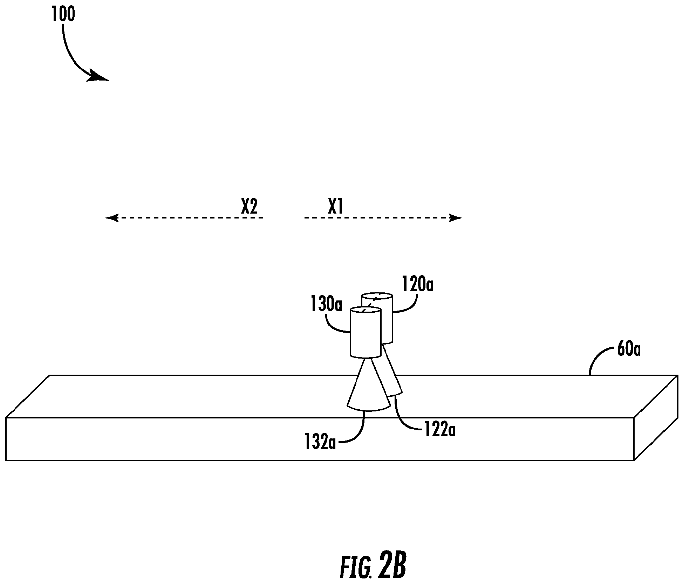

Referring now to FIGs. 2-5, FIG. 2 shows an illustrated view of a sensing system 100, in accordance with an embodiment of the disclosure. The sensing system 100 is in operative communication with the controller 30. Alternatively, the sensing system 100 may contain individual controllers that could communicate with the controller 30. As shown in FIGs. 1 and 2, the sensing system 100 is located on a side of the elevator car 23 opposite a scattering surface 60a. In the illustrated embodiment of FIG. 2, the sensing system 100 is located on a side of the elevator car 23 opposite the car guide rail 60 and thus the guide rail 60 is the scattering surface 60a. As may be appreciated by one of skill in the art, the sensing system 100 may be located in various other locations having various other scattering surfaces 60a, such as, for example on the counterweight 28 opposite the counterweight guide rail 70 (the counterweight guide rail 70 being the scattering surface) and/or on the side of the elevator car 23 opposite a wall of the hoistway 50 (the wall of the hoistway 50 being the scattering surface).

As shown in FIG. 2, the sensing system 100 includes a first light source 120a and a first light sensing device 130a. The first light source 120a and the first light sensing device 130a may be in line with each other as shown in FIG. 2, perpendicular to each other as shown in FIG. 2A, or any other orientations that may be appreciated by one of skill in the art. In an embodiment, in line may be defined as perpendicular to the direction of motion X1 of the elevator car 23, as shown in FIG. 2. FIGs. 2, 2A, and 2B display various configurations for the sensing system 100 that may alter the way the sensing system 100 operates.

As shown in FIG. 2, the sensing system 100 may also include a second light source 120b and a second light sensing device 130b. The second light source 120b and the second light sensing device 130b may be in line with each other as shown in FIG. 2. In the embodiment of FIG. 2, the second light sensing device 130b may be located at a first distance D1 away from the first light sensing device 130a towards the first direction X1, thus the second light sensing device 130b will be ahead of the first light sensing device 130a as they travel over the scattering surface 60a. In an alternate embodiment, the second light sensing device 130b may be located at a first distance D1 away from the first light sensing device 130a away from the first direction X1, thus the second light sensing device 130b will be behind of the first light sensing device 130a as they travel over the scattering surface 60a. Advantageously, the size of the first distance D1 may be as small as possible given the geometrical constraints of the light sources and detectors and likely on the order of millimeters. In one embodiment, first distance D1 may be 10 millimeters. In one embodiment, first distance D1 may be greater than or less than 10 millimeters.

In the configuration shown in FIG. 2, the second light source 120b is configured to emit a plurality of second light impulses onto the scattering surface 60a at a second impulse rate as the elevator car 23 moves through a route segment in a first direction X1. The second light sensing device 130b configured to measure light scattered off the scattering surface 60a for each of the second light impulses and log the measurements as the baseline dataset DSₒ. Meanwhile, the first light source 120a is configured to emit a plurality of first light impulses onto a scattering surface 60a at a first impulse rate as the elevator car 23 moves through a route segment in a first direction X1. The first light sensing device 130a is configured to measure a first data set DS1 comprising light scattered off the scattering surface 60a for each of the first light impulses.

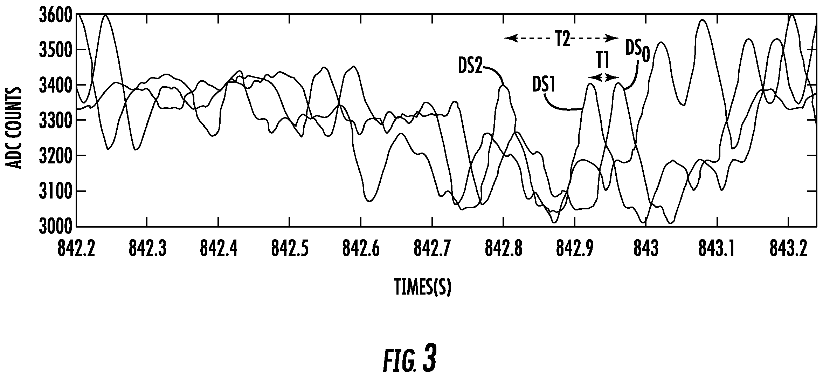

As sensing system 100 moves in a first direction X1, a first data set DS1 of scattered light captured by the first light sensing device 130a may be compared to the baseline data set DSₒ of scattered light captured by the second light sensing device 130b, as seen in FIG. 3. Then a first correlation is determined between the first data set DS1 and the baseline data set DSₒ, meaning that the two data sets DS1, DSₒ should show similar trends in measured scattered light but offset by a first offset time period T1, as shown in FIG. 3. The velocity of the sensing system 100 (and ultimately the elevator car on which the velocity system 100 is located) may be determined in response to the first distance D1 and the first offset time period T1. Specifically, velocity of the sensing system may be determined by dividing the first distance D1 by the first offset time period T1. In an embodiment, the controller 30 is configured to determine a first correlation in response to the first data set DS1 and the baseline data set DSₒ. The first correlation includes a first offset time period T1 between the first data set DS1 and the baseline dataset DSₒ. The controller 30 is then configured to determine a first velocity in response to the first offset time period T1 and the first distance D1.

The sensing system 100 may include additional light sources and light sensing devices. Advantageously, additional light sources may be able to provide increased accuracy and/or redundancy by being able to compare the determined velocity, as will be discussed further below. For instance, FIG. 2 shows a third light source 120c and a third light sensing device 130c. The third light source 120c and the third light sensing device 130c may be in line with each other as shown in FIG. 2. The third light sensing device 130c may be located at a second distance D2 away from the second light sensing device 130b. Advantageously, the second D2 would be optimized for maximum velocity and would likely be on the order of centimeters. In one embodiment, second distance D2 may be 10 centimeters. In one embodiment, second distance D2 may be greater than or less than 10 centimeters.

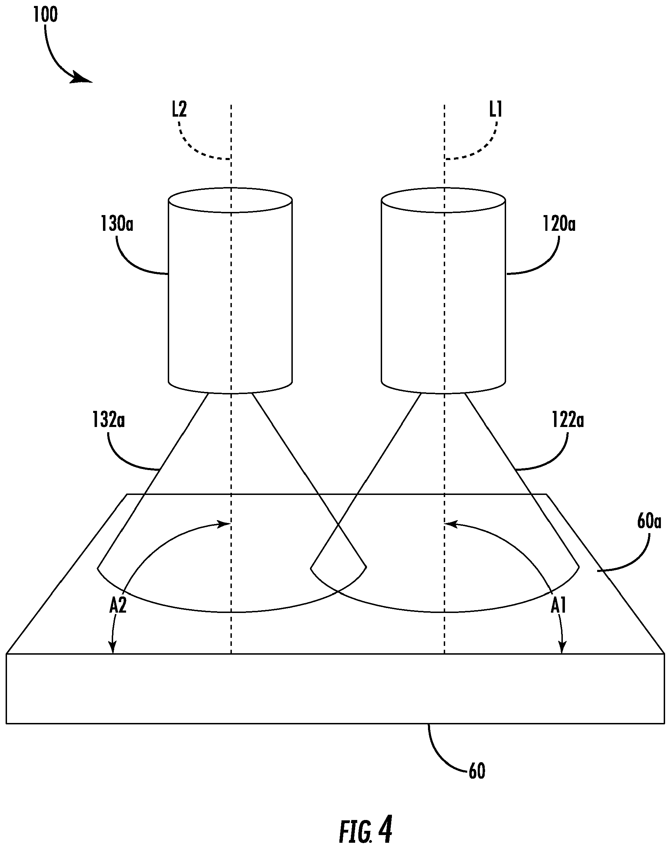

As sensing system 100 moves in a first direction X1, a second data set DS2 of scattered light captured by the third light sensing device 130c may be compared to the baseline data set DSₒ of scattered light captured by the second light sensing device 130b, as seen in FIG. 3. Then a second correlation is determined between the second data set DS2 and the baseline data set DSₒ, meaning that the two data sets DS2, DSₒ should show similar trends in measured scattered light but offset by a second offset time period T2, as shown in FIG. 4. The velocity of the sensing system 100 (and ultimately the elevator car on which the velocity system 100 is located) may be determined in response to the second distance D2 and the second offset time period T2. Specifically, velocity of the sensing system may be determined by dividing the first distance D2 by the second offset time period T2. In an embodiment, the controller 30 is configured to determine a second correlation in response to the second data set DS2 and the baseline data set DSₒ. The second correlation includes a second offset time period T2 between the second data set DS2 and the baseline dataset DSₒ. The controller 30 is then configured to determine a second velocity in response to the second offset time period T2 and the second distance D2.

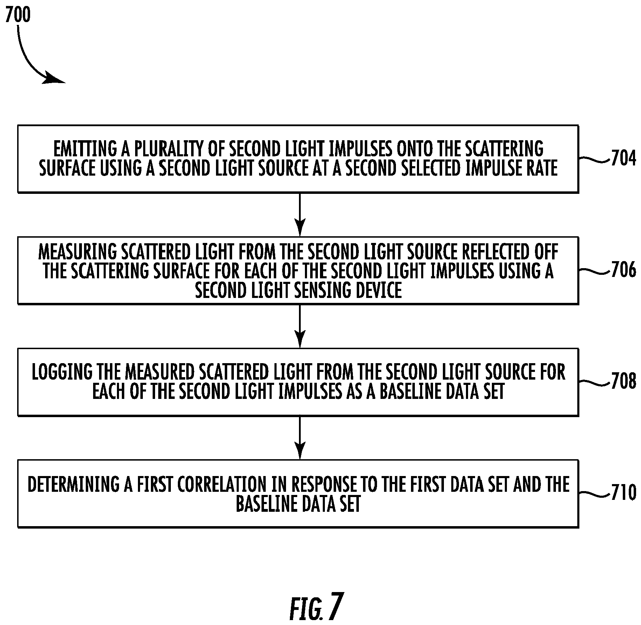

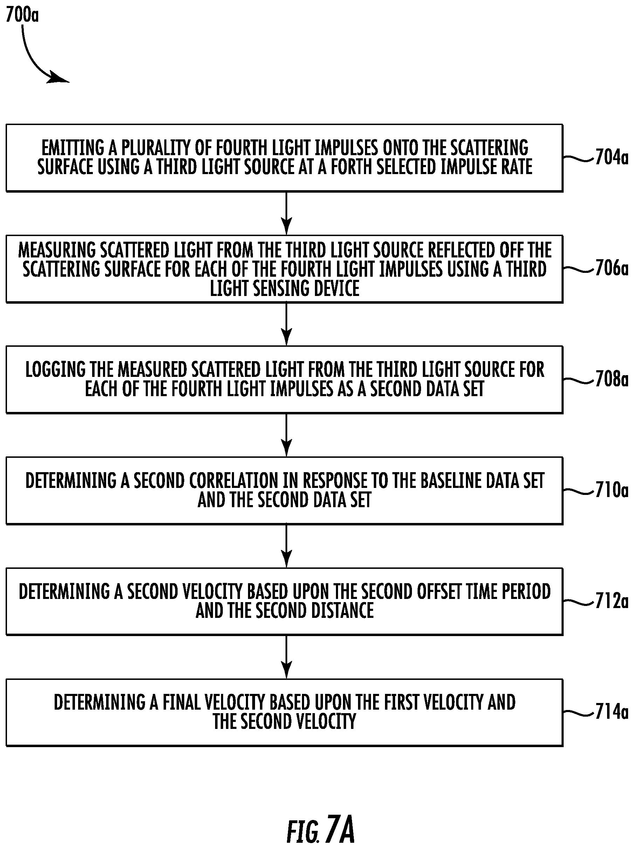

The controller 30 is configured to determine a final velocity in response to the first velocity and the second velocity. In one embodiment, the final velocity may be determined by taking an average of the first velocity and the second velocity. In one embodiment, the controller 30 may determine the velocity of the elevator car 23 utilizing the distance between any pair of light sources/light sensing devices and the time offset in the data set from those corresponding light sources/light sensing devices. In another embodiment, the velocity can be determined by comparing the position of the light sensing device 130a-130c on the rail 60 at different times/locations by cross correlating the signal of a light sensing device 130a-130c over a given sample window to that of a learn run, as discussed further below. The method of operation associated with the sensor system 100 configuration of FIG. 2 is discussed further below in method 700 and 700a of FIGs. 7 and 7a.

In the configuration shown in FIG. 2A, the sensing system 100 comprises a first light source 120a, a first light sensing device 130a, and a second light sensing device 130b. In alternate embodiments, additional light sensing devices may be installed at different locations and at different angles relative to the first light source 130a. The second light sensing device 130b is located perpendicular to the first light source 120a towards the first direction X1 and the first light sensing device 130a is located perpendicular to the first light source 120a towards a second direction X2 opposite the first direction X1, as seen in FIG. 2.

The first light source 120a is configured to emit a plurality of first light impulses onto the scattering surface 60a at a first impulse rate as the elevator car 23 moves through a route segment in a first direction X1. The second light sensing device 130b is configured to measure light scattered off the scattering surface 60a for each of the first light impulses and log the measurements as the baseline dataset DSₒ. Then the first light sensing device 130a is configured to measure light scattered off the scattering surface 60a for each of the first light impulses as a first data set DS1 and then the first data set DS1 to the baseline dataset DSₒ.

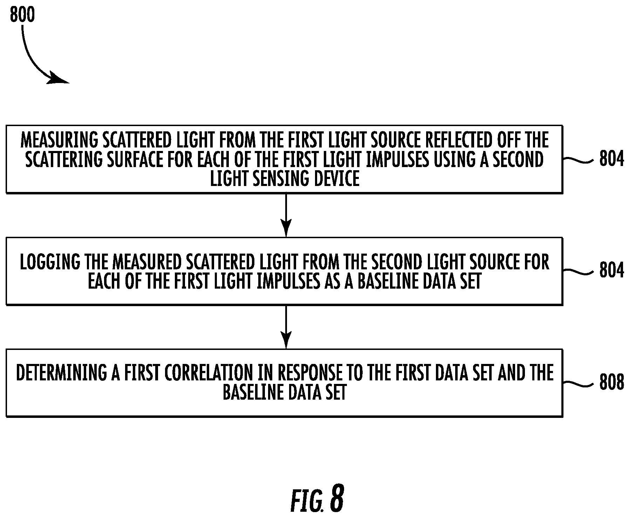

As sensing system 100 moves in a first direction X1, the first data set DS1 of scattered light captured by the first light sensing device 130a may be compared to the baseline data set DSₒ of scattered light captured by the second light sensing device 130b, as seen in FIG. 3. Then a first correlation is determined between the first data set DS1 and the baseline data set DSₒ, meaning that the two data sets DS1, DSₒ should show similar trends in measured scattered light but offset by a first offset time period T1, as shown in FIG. 3. The velocity of the sensing system 100 (and ultimately the elevator car on which the velocity system 100 is located) may be determined in response to the first distance D1 and the first offset time period T1. Specifically, velocity of the sensing system may be determined by dividing the first distance D1 by the first offset time period T1. In an embodiment, the controller 30 is configured to determine a first correlation in response to the first data set DS1 and the baseline data set DSₒ. The first correlation includes a first offset time period T1 between the first data set DS1 and the baseline dataset DSₒ. The controller 30 is then configured to determine a first velocity in response to the first offset time period T1 and the first distance D1. In alternate embodiments with additional light sensing devices, multiple velocity measurements can be used and averaged together to improve accuracy of the measurement and provide additional robustness. Advantageously, additional light sensing devices would also enhance sensitivity to surfaces of varying roughness. Additionally, the light sources and the light sensing devices could in principle be swapped. The method of operation associated with the sensor system 100 configuration of FIG. 2A is discussed further below in method 800 of FIG. 8.

In the configuration shown in FIG. 2B, the sensing system 100 includes a first light source 120a and a first light sensing device 130a. The sensor system 100 of FIG. 2B is configured to first conduct a positional learn run prior to moving the elevator car 23 through the route segment. During the learn run, the sensor system 100 is moved over the scattering surface 60a at a selected velocity. The first light source 120a is configured to emit a plurality of third light impulses onto the scattering surface 60a at a first impulse rate as the sensor system 100 moves through the learn run in a first direction X1. The first light sensing device 130a is configured to measure light scattered off the scattering surface 60a for each of the third light impulses and log the measurements as the baseline data set DSₒ. A relative position on the scattering surface 60a is determined for each of the third light impulses in the baseline data set DSₒ in response to the selected velocity. Once the learn run is complete, the elevator car 23 may be moved through the route segment in the first direction X1.

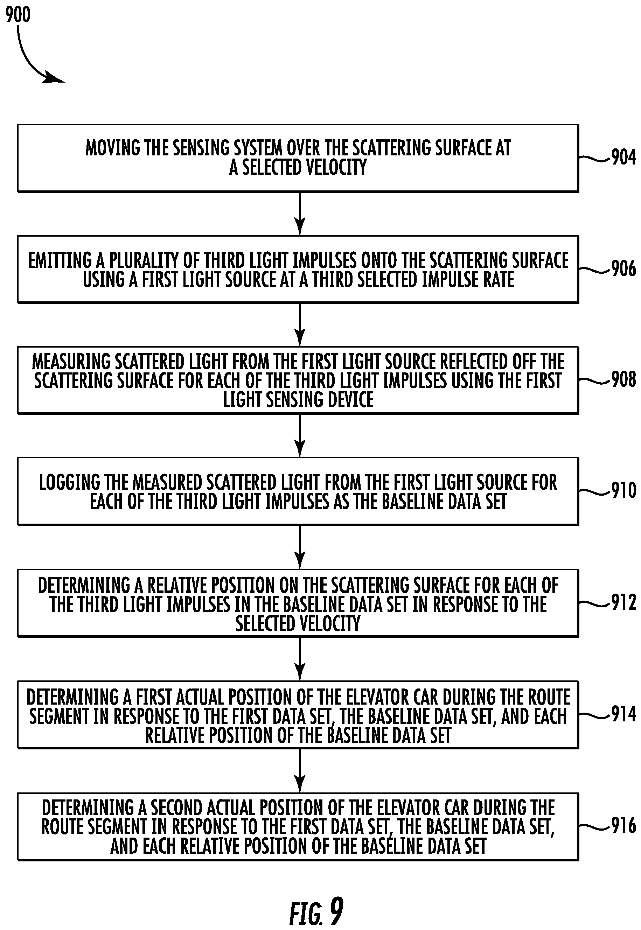

As sensing system 100 moves in a first direction X1, the first data set DS1 of scattered light captured by the first light sensing device 130a may be compared to the baseline data set DSₒ captured during the learn run, as seen in FIG. 3. Then a first correlation is determined between the first data set DS1 and the baseline data set DSₒ, meaning that the two data sets DS1, DSₒ should show similar trends in measured scattered light. The velocity of the sensing system 100 (and ultimately the elevator car on which the velocity system 100 is located) may be calculated by determining the actual position of the elevator 23 car during the route segment by correlating the first data set DS1 to the baseline data set DSₒ, for two consecutive measurements. The method of operation associated with the sensor system 100 configuration of FIG. 2B is discussed further below in method 900 of FIG. 9.

In an embodiment, the light sources 120a-120c may include a light emitting diode (LED) and/or a laser diode. The light sources 120a-120c may include other light sources such, as for example an incandescent light bulb, arc lamp, gas discharge lamp, or any other light source known to one of skill in the art. The light sources 120a-120c each emit light 122a-122c onto the scattering surface 60a. The light sources 120a-120c may each emit light 122a-122c at a selected impulse rate, which would strobe the light 122a-122c on the scattering surface 60a. For example, the selected impulse rate may vary between 1 kHz to 100 kHz. In one embodiment, the selected impulse rate may be less than 1 kHz or greater than 100 kHz. The light sources 120a-120c may emit light at one or more wavelengths, such as, for example, infrared light or blue visible light. The light sensing devices 130a-130c are configured to measure scattered light signals from their respective light source 120a-120c. Scattered light is light 122a-122c from the light sources 120a-120c that hits the scattering surface 60a and is scattered off in various directions (i.e. scatters). Advantageously, light will scatter differently in different areas of the scattering surface 60a. The location along the scattering surface 60a may be determined by measuring and logging the light scatter off the scattering surface 60a over a given sensing region and then comparing a current measurement to baseline data. The light sensing devices 130a-130c are configured to measure scattered light from their respective light sources 120a-120c reflected off the scattering surface 60a within their respective sensing region 132a-132c. As may be appreciated by one of skill in the art, the emitted light may completely overlap with the sensing region. In one embodiment, the sensing region 132a-132c may not completely overlap with the respective emitted light 122a-122c. For example, on a rough surface, the sensing region 132a-132c may not completely overlap with the respective emitted light 122a-122c because light will scatter in various directions and not just where the light is directed by the light source. In another example, on a smooth highly reflective scattering surface, the sensing region 132a-132c may completely overlap with the respective emitted light 122a-122c to detect light scatter. For example, the first light sensing device 130a is configured to measure scattered light from the first light source 120a with the first sensing region 132a. The light sensing devices 130a-130c may include photodiodes phototransistors, photo resistors, phototubes, and other light sensing sensors known to one of skill in the art.

The light sources 120a-120c may be oriented at various angles relative to the scattering surface 60a to detect different types of light scatter. In the example of FIG. 4, the first light source 120a and the first light sensing device 130a are oriented in a perpendicular orientation with the scattering surface 60a, which is meant to detect back scatter of light. A perpendicular orientation means that a first angle A1 between the scattering surface 60 and a first axis L1 of the first light source 120a is equal to about 90 degrees and a second angle A2 between the scattering surface 60a and a second axis L2 of the first light sensing device 130a is equal to about 90 degrees. As may be appreciated by one of skill in the art, although the perpendicular to the scattering surface 60, the emitted light 122a may overlap with the sensing region 132a.

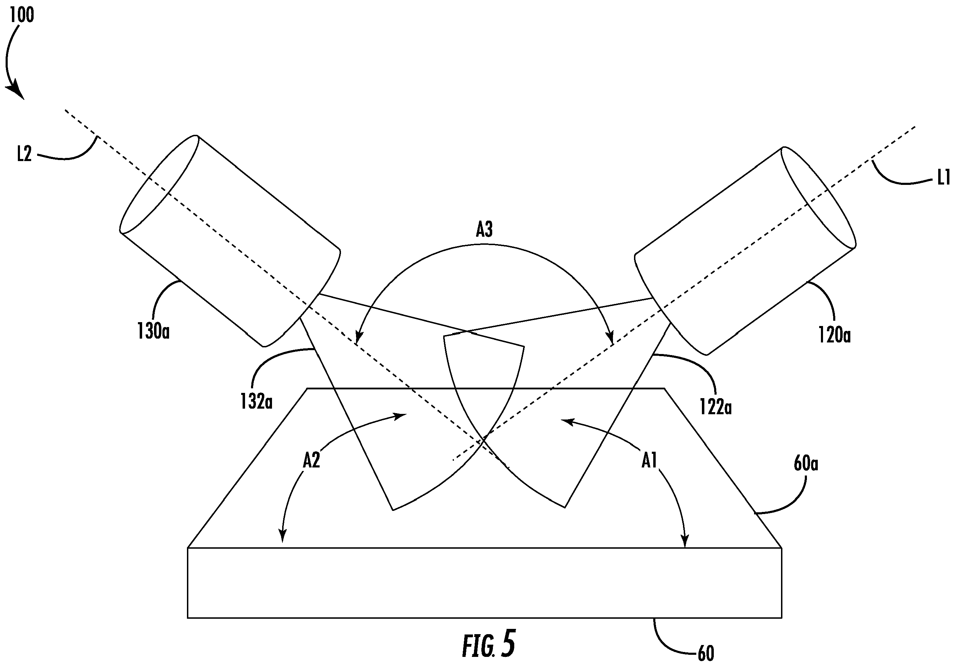

In the example of FIG. 5, the first light source 120a and the first light sensing device 130a are oriented in a non-perpendicular orientation having a first angle of coincidence A3 greater than 90 degrees with the scattering surface 60a, which is meant to capture forward scatter of light. A non-perpendicular orientation means that a first angle A1 between the scattering surface 60a and a first axis L1 of the first light source 120a is not equal to 90 degrees and a second angle A2 between the scattering surface 60 and a second axis L2 of the first light sensing device 130a is not equal to 90 degrees. A non-perpendicular orientation also means that a first angle of coincidence A3 between the first light source 120a and the first light sensing device 130a is not equal to zero. In a perpendicular orientation, the first angle of coincidence A3 would be about zero. The first angle of coincidence A3 may be defined as the angle between the first axis L1 and the second axis L2. A first angle of coincidence A3 of 180 degrees would mean that the first light source 120a is pointing directly at the first light sensing device 130a. Each set of light sources and light sensing devices have their own angle of coincidences. In an embodiment, a first angle of coincidence A3 between the first light source 120a and the first light sensing device 130a is greater than 0 degrees and less than or equal to about 180 degrees; and a second angle of coincidence between the second light source 120b and the second light sensing device 130b is about equal to the first angle of coincidence A3.

In an embodiment, the second and third light sources 120b, 120c are orientated at the same angle A1 with respect to the scattering surface 60a as the first light source 120a. In another embodiment, the second and third light sensing devices 130b, 130c are orientated at the same angle A2 with respect to the scattering surface 60a as the first light sensing device 130a. In another embodiment, the second light source 120b and the second light sensing device 130b have the same angle of coincidences as the first light source 120a and the first light sensing device 130a. In another embodiment, the third light source 120c and the third light sensing device 130c have the same angle of coincidences as the first light source 120a and the first light sensing device 130a.

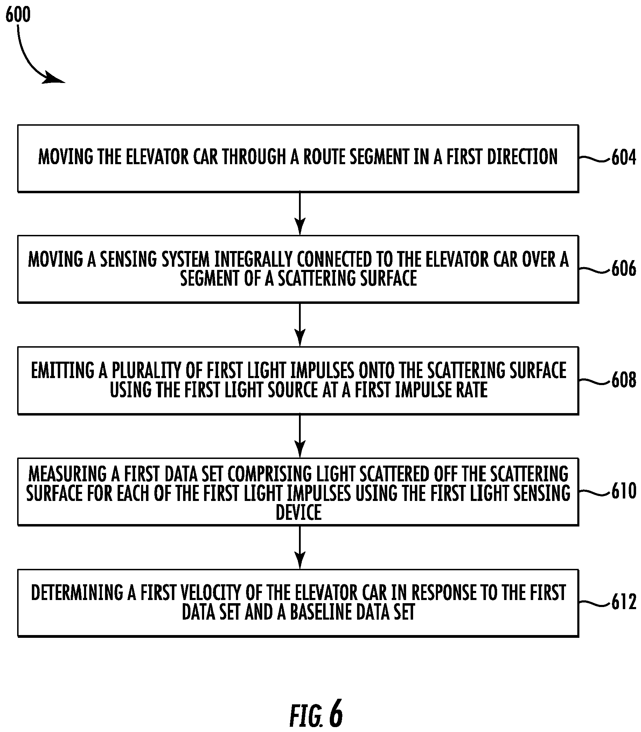

Referring now to FIGs. 6-9, while referencing components of FIGs. 1-5. FIG. 6 shows a flow chart of method 600 of monitoring an elevator car 23, in accordance with an embodiment of the disclosure. At block 604, the elevator car 23 through a route segment in a first direction X1. At block 606, the sensing system 100 integrally connected to the elevator car 23 is moved over a segment of a scattering surface. As mentioned above, the sensing system 100 comprises a first light source 120a and a first light sensing device 130a. At block 608, a plurality of first light impulses are emitted onto the scattering surface 60a using the first light source 120a at a first impulse rate. At block 610, a first data set DS1 is measured. The first set of data DS1 comprises light scattered off the scattering surface 60a for each of the first light impulses using the first light sensing device 120a. At block 612, a first velocity of the elevator car 23 is determined in response to the first data set DS1 and a baseline data set DSₒ. The method of collection of the baseline data set DSₒ will vary based on the configured of the sensor system 100, as illustrated in FIGs. 6, 6A, and 6B.

FIG. 7 shows the method 700 of collection of the baseline data set DSₒ using the sensor system 100 configuration of FIG. 2. In method 700, the baseline data set DSₒ is determined while the elevator 23 is moved through the route segment. At block 704, a plurality of second light impulses are emitted onto the scattering surface 60a using a second light source 120b at a second selected impulse rate. At block 706, scattered light from the second light source 120b reflected off the scattering surface 60a is measured for each of the second light impulses using a second light sensing device 130b. As mentioned above, in the configuration of FIG. 2, the second light detecting device 130b is located at a first distance D1 away from the first light detecting device towards the first direction X1. At block 708, the measured scattered light from the second light source 120b for each of the second light impulses is logged as a baseline data set DSₒ. The baseline data set DSₒ may be logged in the memory of the controller 30 or in the sensor system 100. At block 710, a first correlation is determined in response to the first data set DS1 and the baseline data set DSₒ. The first correlation includes a first offset time period T1 between the first data set DS1 and baseline data set DSₒ. The first velocity from block 612 of the elevator car 23 is determined based upon the first offset time period T1 and the first distance D 1.

If the sensor system 100 comprises a third light source 120c and a third light sensing device 130c, then the additional steps of method 700a in FIG. 7A may be added onto method 700. At block 704a, a plurality of fourth light impulses are emitted onto the scattering surface 60a using a third light source 120c at a fourth selected impulse rate. At block 706a, scattered light from the third light source 120c is reflected off the scattering surface 60a is measured for each of the fourth light impulses using a third light sensing device 130c. As mentioned above, in the configuration of FIG. 2, the third light detecting device 130c is located at a first distance D2 away from the first light detecting device 120a towards the second direction X2. At block 708a, the measured scattered light from the third light source 120b for each of the second light impulses is logged as a second data set DS2. The second dataset DS1 may be compared to the baseline data set DSₒ. At block 710a, a second correlation is determined in response to the second data set DS2 and the baseline data set DSₒ. The first correlation includes a second offset time period T2 between the second data set DS2 and baseline data set DSₒ. At block 712a, a second velocity based upon the second offset time period T2 and the second distance D2 is determined. At block 714a, a final velocity is determined based upon the first velocity determined in block 612 and the second velocity determined in block 710a.

FIG. 8 shows the method 800 of collection of the baseline data set DSₒ using the sensor system 100 configuration of FIG. 2A. In method 800, the baseline data set DSₒ is determined while the elevator 23 is moved through the route segment. At block 804, scattered light from the first light source 120a reflected off the scattering surface 60a is measured for each of the first light impulses using a second light sensing device 130a. As mentioned above, in the configuration of FIG. 2A, the second light sensing device 130b is located perpendicular to the first light source 120a towards the first direction X1 and the first light sensing device 130a is located perpendicular to the first light source 120a towards a second direction X2 opposite the first direction X1. At block 806, the measured scattered light from the second light source 120b is logged for each of the first light impulses as a baseline data set DSₒ. The baseline data set DSₒ may be logged in the memory of the controller 30 or in the sensor system 100. At block 808, a first correlation in response to the first data set DS1 and the baseline data set DSₒ. The first correlation includes a first offset time period T1 between the first data set DS1 and baseline data set DSₒ. The first velocity from block 612 of the elevator car 23 is determined based upon the first offset time period T1 and the first distance D1.

FIG. 9 shows the method 900 of collection of the baseline data set DSₒ using the sensor system 100 configuration of FIG. 2B. In method 900, the baseline data set DSₒ is determined through a positional learn run conducted prior to the elevator 23 moving through the route segment. At block 904, the sensing system 100 of FIG. 2B is moved over the scattering surface 60a at a selected velocity. At block 906, a plurality of third light impulses is emitted onto the scattering surface 60a using a first light source 120a at a third selected impulse rate. At block 908, the scattered light from the first light source 120a reflected off the scattering surface 60a is measured for each of the third light impulses using the first light sensing device 130a. At block 910, the measured scattered light from the first light source 120a for each of the third light impulses is logged as the baseline data set DSₒ. The baseline data set DSₒ may be logged in the memory of the controller 30 or in the sensor system 100. At block 912, a relative position on the scattering surface 60a for each of the third light impulses in the baseline data set DSₒ in response to the selected velocity. At block 914, a first actual position of the elevator car 23a during the route segment is determined in response to the first data set DS1, the baseline data set DSₒ, and each relative position of the baseline data set DSₒ. At block 916, a second actual position of the elevator car 23a during the route segment is determined in response to the first data set DS1, the baseline data set DSₒ, and each relative position of the baseline data set DSₒ. The first velocity from block 612 is determined in response to the first actual position, the second actual position, and an elapsed time between the first actual position and the second actual position.

While the above description has described the flow process of FIGs. 6-9 in a particular order, it should be appreciated that unless otherwise specifically required in the attached claims that the ordering of the steps may be varied.

As described above, embodiments can be in the form of processor-implemented processes and devices for practicing those processes, such as processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of monitoring an elevator car, the method comprising:
moving the elevator car through a route segment in a first direction;
moving a sensing system integrally connected to the elevator car over a segment of a scattering surface, the sensing system comprising a first light source and a first light sensing device;
emitting a plurality of first light impulses onto the scattering surface using the first light source at a first impulse rate;
measuring a first data set comprising light scattered off the scattering surface for each of the first light impulses using the first light sensing device; and
determining a first velocity of the elevator car in response to the first data set and a baseline data set.

2. The method of claim 1, further comprising:
determining the baseline data through a baseline run conducted while moving the elevator through the route segment, the baseline run comprising:
emitting a plurality of second light impulses onto the scattering surface using a second light source at a second selected impulse rate;
measuring scattered light from the second light source reflected off the scattering surface for each of the second light impulses using a second light sensing device, the second light detecting device being located at a first distance away from the first light detecting device towards the first direction; and
logging the measured scattered light from the second light source for each of the second light impulses as a baseline data set;
and optionally further comprising:
determining a first correlation in response to the first data set and the baseline data set, the first correlation includes a first offset time period between the first data set and baseline data set;
wherein the first velocity of the elevator car is determined based upon the first offset time period and the first distance.

3. The method of claim 1 or 2, further comprising:
determining the baseline data through a baseline run conducted while moving the elevator through the route segment, the baseline run comprising:
measuring scattered light from the first light source reflected off the scattering surface for each of the first light impulses using a second light sensing device, wherein the second light sensing device is located perpendicular to the first light source towards the first direction and the first light sensing device is located perpendicular to the first light source towards a second direction opposite the first direction; and
logging the measured scattered light from the second light source for each of the first light impulses as a baseline data set;
and optionally, further comprising:
determining a first correlation in response to the first data set and the baseline data set, the first correlation includes a first offset time period between the first data set and baseline data set;
wherein the first velocity of the elevator car is determined based upon the first offset time period and the first distance.

4. The method of any preceding claim, further comprising:
determining the baseline data through a positional learn run conducted prior to moving the elevator through the route segment, the positional learn run comprising:
moving the sensing system over the scattering surface at a selected velocity;
emitting a plurality of third light impulses onto the scattering surface using a first light source at a third selected impulse rate;
measuring scattered light from the first light source reflected off the scattering surface for each of the third light impulses using the first light sensing device;
logging the measured scattered light from the first light source for each of the third light impulses as the baseline data set; and
determining a relative position on the scattering surface for each of the third light impulses in the baseline data set in response to the selected velocity;
and optionally, further comprising:
determining a first actual position of the elevator car during the route segment in response to the first data set, the baseline data set, and each relative position of the baseline data set; and
determining a second actual position of the elevator car during the route segment in response to the first data set, the baseline data set, and each relative position of the baseline data set;
wherein the first velocity is determined in response to the first actual position, the second actual position, and an elapsed time between the first actual position and the second actual position.

5. The method of any preceding claim, further comprising:
emitting a plurality of fourth light impulses onto the scattering surface using a third light source at a fourth selected impulse rate, the third light source being located at a second distance away from the second light source towards a second direction opposite the first direction;
measuring scattered light from the third light source reflected off the scattering surface for each of the fourth light impulses using a third light sensing device;
logging the measured scattered light from the third light source for each of the fourth light impulses as a second data set;
determining a second correlation in response to the baseline data set and the second data set, the second correlation includes a second offset time period between the baseline data set and the second data set;
determining a second velocity based upon the second offset time period and the second distance; and determining a final velocity based upon the first velocity and the second velocity.

6. The method of any preceding claim, wherein:
the scattering surface is an elevator car guide rail.

7. A sensing system for monitoring an elevator car, the sensor system comprising:
a first light source configured to emit a plurality of first light impulses onto a scattering surface at a first impulse rate as the elevator car moves through a route segment in a first direction;
a first light sensing device configured to measure a first data set comprising light scattered off the scattering surface for each of the first light impulses; and
a controller configured to determine a first velocity of the elevator car in response to the first data set and a baseline data set.

8. The sensing system of claim 7, further comprising:
a second light source configured to emit a plurality of second light impulses onto the scattering surface at a second impulse rate as the elevator car moves through a route segment in a first direction; and
a second light sensing device configured to measure light scattered off the scattering surface for each of the second light impulses and log the measurements as the baseline dataset, the second light sensing device being located at a first distance away from the first light sensing device towards the first direction;
and optionally wherein:
the controller is configured to determine a first correlation in response to the first data set and the baseline data set, the first correlation includes a first offset time period between the first data set and baseline data set;
wherein the first velocity of the elevator car is determined based upon the first offset time period and the first distance.

9. The sensing system of claim 7 or 8, further comprising:
a second light sensing device configured to measure light scattered off the scattering surface for each of the first light impulses and log the measurements as the baseline dataset, the second light sensing device being located perpendicular to the first light source towards the first direction and the first light sensing device is located perpendicular to the first light source towards a second direction opposite the first direction;
wherein the second light sensing device is located at a first distance away from the first light sensing device;
and optionally wherein:
the controller is configured to determine a first correlation in response to the first data set and the baseline data set, the first correlation includes a first offset time period between the first data set and baseline data set;
wherein the first velocity of the elevator car is determined based upon the first offset time period and the first distance.

10. The sensing system of claim 7, 8 or 9 wherein:
the baseline data is determined through a positional learn run conducted prior to moving the elevator through the route segment, the positional learn run having operations comprising:
moving the sensing system over the scattering surface at a selected velocity;
emitting a plurality of third light impulses onto the scattering surface using a first light source at a third selected impulse rate;
measuring scattered light from the first light source reflected off the scattering surface for each of the third light impulses using the first light sensing device;
logging the measured scattered light from the first light source for each of the third light impulses as the baseline data set; and
determining a relative position on the scattering surface for each of the third light impulses in the baseline data set in response to the selected velocity;
and optionally wherein:
the controller is configured to determine:
a first actual position of the elevator car during the route segment in response to the first data set, the baseline data set, and each relative position of the baseline data set; and
a second actual position of the elevator car during the route segment in response to the first data set, the baseline data set, and each relative position of the baseline data set;
wherein the first velocity is determined in response to the first actual position, the second actual position, and an elapsed time between the first actual position and the second actual position.

11. The sensing system of any of claims 7-10, wherein:
the scattering surface is an elevator car guide rail.

12. The sensing system of any of claims 7-11, wherein:
the first light source and the first light sensing device are located on the elevator car.

13. The sensing system of claim 8, wherein:
the first light source, the first light sensing device, the second light source, and the second light sensing device are each oriented in a perpendicular orientation with the scattering surface.

14. The sensing system of claim 8, wherein:
a first angle of coincidence between the first light source and the first light sensing device is greater than 0 degrees and less than or equal to about 180 degrees; and
a second angle of coincidence between the second light source and the second light sensing device is about equal to the first angle of coincidence.
